(19) Europäisches Patentamt
European Patent Office
Office européen des brevets

(11) **EP 3 355 112 A1**

(12) **EUROPEAN PATENT APPLICATION**

(43) Date of publication:
**01.08.2018 Bulletin 2018/31**

(51) Int Cl.:
**G03B 15/05** (2006.01)     **G03B 39/00** (2006.01)
**D01D 5/00** (2006.01)     **G03B 17/56** (2006.01)

(21) Application number: **18153159.1**

(22) Date of filing: **24.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **31.01.2017 CZ 201733363 U**

(71) Applicants:
• **Technicka univerzita v Liberci**
  **461 17 Liberec 1 (CZ)**
• **Elmarco s.r.o.**
  **46001 Liberec XI (CZ)**

(72) Inventors:
• **Krenek, Radim**
  **460 01 Liberec IV - Perstyn (CZ)**
• **Jakubek, Frantisek**
  **460 15 Liberec XV - Stary Harcov (CZ)**
• **Kotek, Michal**
  **405 02 Decin 27 (CZ)**
• **Kopecky, Vaclav**
  **460 15 Liberec XV - Stary Harcov (CZ)**

(74) Representative: **Musil, Dobroslav**
  **Zabrdovicka 801/11**
  **615 00 Brno (CZ)**

(54) **DEVICE FOR HIGH-SPEED MONITORING OF THE PROCESS OF PRODUCTION OF NANOFIBERS BY ELECTROSTATIC SPINNING**

(57)     A device for monitoring of the spinning process in the production of nanofibers by electric or electrostatic spinning, which comprises a light source (3), a camera (1) with a horizontal resolution of at least 1920 pixels and a frame rate of at least 80 frames per second, which is provided with a macro lens (2) having a focal length of at least 150 mm and a luminance of at least f/4, and is connected or connectable to an evaluation unit (6), whereby the resolution of the camera (1) with the macro lens (2) is at least 20 $\mu$m/1 pixel.

Fig. 1

EP 3 355 112 A1

**Description**

**Technical field**

The technical solution relates to a device for high-speed monitoring of the process of production of nanofibers by electrostatic spinning.

**Background art**

It is often high-speed monitoring that is used to understand very fast processes which take place at a microscopic level. The working distances (i.e., the distances between the lens of the objective and the object being observed) in commonly used optical microscopy or macro photography are usually up to 100 mm. The minimum safe distance for monitoring the process of production of nanofibers by electrostatic spinning, which takes place under high voltages up to 100 kV, is, however, several times larger. For example, for a laboratory device NS LAB (Elmarco), the minimum safe distance from the spinning electrode is 410 mm and for the smallest industrial device NanospiderTM (Elmarco) it is 500 mm. Due to this fact, standard optical microscopy or macrophotography cannot be used to monitor the process of production of nanofibers by electrostatic spinning. At present, there is no device or method that would allow to monitor this process with high speed, or to obtain high-speed recording of the process.

The aim of the technical solution is therefore to provide a device for high-speed monitoring of the process of production of nanofibers by electrostatic spinning.

**Principle of the invention**

The aim of the technical solution is achieved by a device for high-speed monitoring of the process of production of nanofibers by electrostatic spinning, whose principle consists in that the device contains a light source, a camera with a horizontal resolution of at least 1920 pixels and a frame rate of at least 80 frames per second, which is provided with a macro lens having a focal length of at least 150 mm and a luminance of at least f/4. The resolution of the camera with the macro lens is at least 20 $\mu$m/1 pixel. The camera is connected or connectable to an evaluation unit. This arrangement allows to obtain high-speed recordings of the process of production of nanofibers by electrostatic spinning with a high resolution and high frame rate, the recordings being used for subsequent visual or software analysis.

A LED-based light source is preferably used as a light source. Its advantage is that it does not affect the monitored process by heat radiation. Particularly suitable for this purpose is a flat light source, such as COB LED light, which is formed by a group of LEDs mounted on a wafer, whose light is concentrated into a narrow light cone. The intensity of the light emitted by a COB LED source is preferably at least 50,000 lx at a distance of at least 500 mm.

If necessary, for example when using the so-called shade-lighting method, the light source is provided with a shade made of a translucent material.

For greater flexibility of the device for monitoring the spinning process, the camera and/or the light source is mounted on a stand with a possibility of movement in at least one horizontal and/or vertical axis and/or around at least one such axis.

The camera is preferably an industrial camera with the ability to set the image height, since the possible reduction of the image height allows further increasing of the scanning speed. In a preferred variant, a monochrome camera, which has a higher sensor sensitivity than a comparable color camera, is used.

To achieve greater measured magnification, at least one spacer ring can be inserted between the camera and the macro lens, which physically increases the distance between the lens and the camera sensor, thereby increasing the scale of the object being scanned.

The high-speed recording of the process of production of nanofibers by electrostatic spinning is then stored and/or evaluated and/or adjusted in the evaluation unit. Preferably, the unit is, e.g., a PC or another similar device.

**Description of drawings**

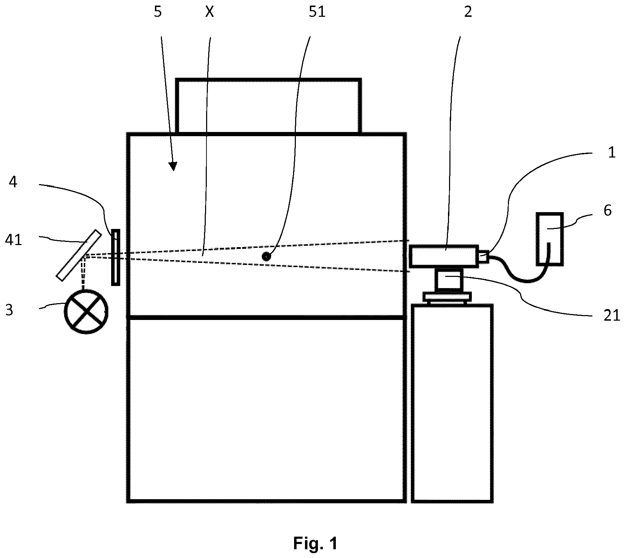

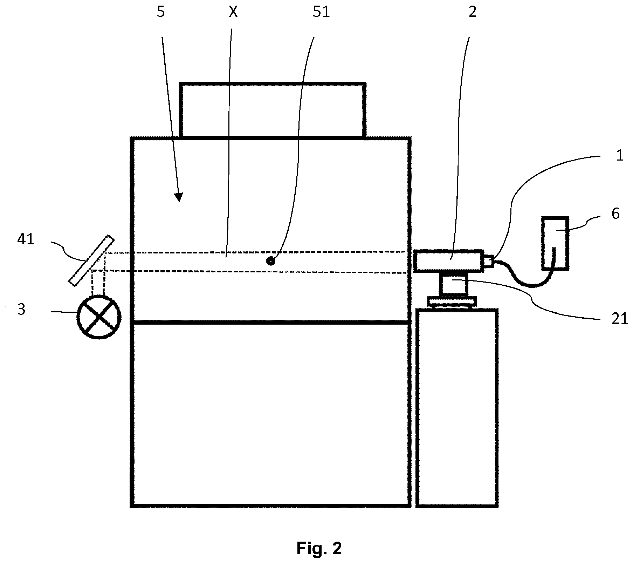

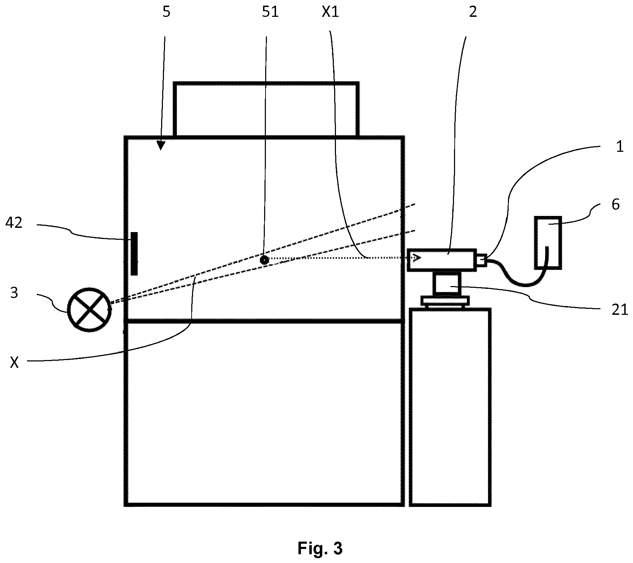

Fig. 1 is a schematic representation of a variant of a device for the monitoring of the process of production of nanofibers by electrostatic spinning according to the technical solution arranged to monitor the electrostatic spinning process using the so-called shade-lighting method, Fig. 2 is a schematic representation of an alternative embodiment of the device arranged to monitor the electrostatic spinning process using the so-called telecentric method of lighting, and Fig. 3 is a schematic representation of an alternative embodiment of the device arranged to monitor the electrostatic spinning process using the so-called reflective method of lighting.

## Examples of embodiment

The device for high-speed monitoring of the process of production of nanofibers by electrostatic spinning of a polymer solution or melt according to the technical solution shown in Figs. 1-3 contains a light source **3** and a camera **1** with a macro lens **2**, which is connected or connectable to an evaluation unit **6**. In the variant of embodiment shown in Fig. 1, the light source **3** is in addition provided with a shade **4** made of a translucent material.

The camera **1** is preferably an industrial camera with a sensor having a diagonal of 1/1.2 inch (25.4/30.48 mm) and a horizontal resolution of at least 1920 pixels. The camera **1** is provided with a central shutter. The scanning speed is at least 80 frames per second, whereby the possible reduction of the image height allows further increasing of the scanning speed to more than 100 frames per second. The most suitable camera appears to be a monochrome industrial camera, which has higher sensor sensitivity than a comparable color (RGB) camera.

The macro lens **2** has a focal length of more than 150 mm and a luminance of at least f/4. If necessary, at least one spacer ring can be inserted between the camera **1** and the macro lens **2** to physically increase the distance between the lens **2** and the camera sensor **1**, thereby increasing the scale of the object being scanned.

The resulting resolution of the macro lens **2** is then determined by the relation:

$$ x = D \cdot 1000 \cdot \mathrm{tg}\left(2 \cdot 1{,}22 \cdot \frac{\lambda/1000}{A \cdot 25400}\right) \cong \frac{2{,}44}{25400} \cdot \frac{\lambda \cdot D}{A}, $$

where x is the resolution of the macro lens **2** in $\mu$m, D is the distance between the macro lens **2** and the object being scanned in mm, $\lambda$ is the wavelength of the light used in nm, and A is the diameter of the inlet aperture of the macro lens **2** in inches.

A resolution of at least 20 $\mu$m/pixel is required to monitor the course of electrostatic spinning of a polymer solution or melt from the spinning electrode **51** formed by a cord (e.g. according to EP 2173930), to identify the shape of the structures from 0.1 mm.

For example, if the macro lens **2** has a diameter of the inlet aperture of 1.5 to 5 inches (38.1 to 127 mm), the distance of the macro lens **2** from the object being scanned is 500 mm and the light source **3** emits light of medium wavelength $\lambda$ = 560 nm, the resolution of the macro lens **2** is 17.9 to 5.4 $\mu$m, which is close to the required object resolution limit.

Due to the high voltage inside the spinning chamber **5**, the minimum safe distance from the spinning electrode **51** is at least 500 mm for Nanospider™ industrial devices (Elmarco) or 410 mm for laboratory equipment NS LAB (Elmarco). As a result, the only effective option for increasing the resolution of the macro lens is to increase the diameter of its inlet aperture. For the high-speed monitoring of the process of production of nanofibers by electrostatic spinning, the resolution of the macro lens **2**, which has an inlet aperture diameter of 1.5 to 5 inches, is sufficient. When the aperture diameter is further increased, the cost and overall dimensions of the device are disproportionately rising.

For example, an industrial camera with a sensor having a diagonal of 1/1.2 inch (25.4/30.48 mm) with a macro lens **2** having a focal length 200 mm can monitor a field of view of horizontal length of approximately 20 to 40 mm with a resolution of 10 up to 20 $\mu$m/pixel.

The ratio of the horizontal size of the sensor of the camera **1** to the horizontal size of the object scanned by the camera **1** indicates the measured magnification. E.g., if the horizontal size of the scanned object is 26.9 mm and the horizontal size of the sensor of the camera **1** is 11.3 mm, the measured magnification is 0.42. If a 68 mm long spacer ring is inserted between the camera **1** and the macro lens **2**, the horizontal size of the scanned object changes to 20.2 mm, and the measured magnification increases to 0.56, with no significant effect on image quality.

For the flexible mounting of the camera **1,** the camera **1** with a macro lens **2** is mounted on a stand **21**, which advantageously allows its movement in at least one horizontal and/or vertical axis, and/or around at least one such axis.

As a light source **3**, preferably a LED-based light source is used, which does not influence the monitored process by heat radiation. The most suitable light source appears to be, e.g., a flat light source **3** of COB LED type, which is a group of LEDs mounted on a wafer, whose light is concentrated into a narrow light cone **X**, providing uniform illumination. The intensity of the light emitted by the used COB LED illumination is preferably at least 50000 lx at a distance of at least 500 mm.

For the flexible mounting of the light source **3**, the source **3** is mounted on a stand, which advantageously allows its movement in at least one horizontal and/or vertical axis, and/or around at least one such axis.

In the high-speed monitoring of the process of production of nanofibers by electrostatic spinning the camera **1** scans by means of the macro lens **2** through the transparent wall of the spinning chamber **5** part of the inner space of the chamber **5** in which electrostatic spinning takes place - for example, the surface of the spinning electrode **51** or its surroundings. This space is then illuminated by the light source **3** from the opposite side of the spinning chamber **5** through the transparent wall.

To provide uniform illumination of the spinning chamber **5**, in which no information is lost or distorted due to the change in brightness, three different lighting methods can be used.

The first of them is the so-called shade-lighting method. In this case, the light source **3** is arranged on the optical axis of the macro lens **2** of the camera **1**. A translucent shade **4**, which is made of, e.g., milk glass, plastic, mineral or foil, is arranged in the wall of the spinning chamber **5** or between the light source **3** and the transparent wall of the spinning chamber **5**. The thickness of the shade **4** ranges from 3 to 20 mm, depending on the material used. The light source **3** is located such that the diameter of the light cone **X** on the shade **4** is in the range between 15 and 40 mm.

In another variant (see, e.g., Fig. 1), the light source **3** may be mounted outside of the optical axis of the macro lens **2** of the camera **1**. In doing so, a mirror **41** or an optical prism is mounted between the light source **3** and the shade **4**. The light from the light source **3** is then reflected by the mirror **41** or the prism on the optical axis of the macro lens **2** of the camera **1**.

In this mode of illumination, the shade **4** in the macro lens **2** of the camera **1** is displayed as an ideal white background, and the objects placed in front of it (i.e., the surface of the spinning electrode **51**, the formed nanofibers, etc.) are displayed in dark shades. This method of illumination enables to use a very short exposure time, which is suitable for scanning very fast processes. Its disadvantage is light scattering on the edges of the objects being scanned, which requires the scanned image to be sharpened by the software or suitably tresholded.

The second variant is the so-called telecentric method. The arrangement of the device for high-speed monitoring of the process of production of nanofibers by electrostatic spinning according to the technical solution is the same as in the preceding method, except that no shade **4** is inserted between the source **3** of telecentric light and the wall of the spinning chamber **5** (see, e.g., Fig. 2). In this case, the telecentric light passes evenly through the spinning chamber **5** past the sensed objects. The advantage of this method is very sharp display of the object contours (e.g. the liquid-air interface). Its disadvantage may be the fact that the image is sensed from a greater depth and that unwanted artifacts, such as flying micro- or nanofibers, are projected in the background, which makes subsequent image analysis more difficult.

The third variant is the so-called reflective method. In this case, the light source **3** is not arranged in the optical axis of the macro lens **2** of the camera **1**. The light from the light source **3** then passes through the spinning chamber **5** at a certain angle, and upon contact with a solution or melt of a polymer on the surface of the spinning electrode **51**, refraction of light occurs (see, e.g., Fig. 3). Only a part **X1** of this light falls on the macro lens of the camera **2** and then on its sensor. In this method of illumination, a dull black background **42** is advantageously arranged behind the object being scanned. The disadvantage of this method is that a smaller amount of light falls on the macro lens **2** of the camera, requiring longer exposure times.

In all these cases, the record obtained by the camera **1** is stored in the evaluation unit **6**, whereby adjustments can be made to it (e.g., by sharpening, filtering, etc.) before further processing or use.

## Industrial applicability

The high-speed monitoring device according to the technical solution is usable especially for monitoring the process of production of nanofibers by electrostatic spinning. In addition, it can also be used for the high-speed monitoring of other microscopic processes, especially those for which it is not possible to place the measuring equipment in the vicinity of the object being measured, e. g. in the environment with a high electric or magnetic field, with a flammable or explosive substance, etc.

## List of references

| | |
|---|---|
| 1 | camera |
| 2 | macro lens |
| 21 | stand |
| 3 | light source |
| 4 | translucent shade |
| 41 | mirror |
| 42 | dull black background |
| 5 | spinning chamber |
| 51 | spinning electrode |
| 6 | evaluation unit |
| X | light cone |
| X1 | part of the refracted light |

**Claims**

1. A device for **monitoring of** the spinning process in the production of nanofibers by electric or electrostatic spinning, **characterized in that** it comprises a light source (3), a camera (1) with a horizontal resolution of at least 1920 pixels and a frame rate of at least 80 frames per second, which is provided with a macro lens (2) having a focal length of at least 150 mm and a luminance of at least f/4, and is connected or connectable to an evaluation unit (6), whereby the resolution of the camera (1) with the macro lens (2) is at least 20 μm/1 pixel.

2. The device according to claim 1, **characterized in that** the light source (3) is a LED-based illumination source.

3. The device according to claim 2, **characterized in that** the LED-based illumination source is flat COB LED illumination source.

4. The device according to any of the preceding claims, **characterized in that** the light source (3) is provided with a shade (4) made of a translucent material.

5. The device according to any of the preceding claims, **characterized in that** the light source (3) is mounted on a stand with a possibility of movement in at least one horizontal and/or vertical axis, and/or with a possibility of turning around at least one such axis.

6. The device according to claim 1, **characterized in that** the camera (1) is mounted on a stand (21) with a possibility of movement in at least one horizontal and/or vertical axis, and/or with a possibility of turning around at least one such axis.

7. The device according to claim 1 or 6, **characterized in that** the camera (1) is monochrome.

8. The device according to any of claims 1, 6, 7, **characterized in that** at least one spacer ring is arranged between the camera (1) and the macro lens (2).

9. The device according to claim 1, **characterized in that** the evaluation unit (6) is a PC.

**Fig. 1**

**Fig. 2**

**Fig. 3**

**EP 3 355 112 A1**

Europäisches Patentamt
European Patent Office
Office européen des brevets

# EUROPEAN SEARCH REPORT

Application Number

EP 18 15 3159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "High Speed Kamera i-SPEED 716 von iX Cameras - Vollauflösung @ 2048x1536 Pixel - Full HD @ 7.700 Bilder/sec", , 21 August 2016 (2016-08-21), XP055484952, Retrieved from the Internet: URL:https://web.archive.org/web/2016082103 4819/http://www.highspeed-xtra.de/high-spe ed-kamera/hochgeschwindigkeitskameras/ix-k amera-i-speed-716.html [retrieved on 2018-06-15] * the whole document * ----- | 1-9 | INV. G03B15/05 G03B39/00 D01D5/00 G03B17/56 |
| Y | Anonymous: "Objektive / Optiken für Highspeedkameras und Hochgeschwindigkeitskameras / HighSpeed-Objektiv", , 21 August 2016 (2016-08-21), XP055484945, Retrieved from the Internet: URL:https://web.archive.org/web/2016082104 1846/http://www.highspeed-xtra.de/hs-zubeh oer/objektive.html [retrieved on 2018-06-15] * the whole document * ----- | 1-9 | |
| Y | KR 100 836 274 B1 (KOREA MACH & MATERIALS INST [KR]) 10 June 2008 (2008-06-10) * paragraphs [0043] - [0063]; figure 1 * ----- | 1-9 | **TECHNICAL FIELDS SEARCHED (IPC)** G03B D01D |
| Y | WO 2009/061508 A1 (UNIV AKRON [US]; RENEKER DARRELL [US]; HAN TAO [US]; YARIN ALEXANDER L) 14 May 2009 (2009-05-14) * page 1; figures 3,5 * * page 17, lines 15-18 * * page 6, lines 4-7 * ----- -/-- | 1-9 | |

The present search report has been drawn up for all claims

| Place of search | Date of completion of the search | Examiner |
|---|---|---|
| Munich | 21 June 2018 | Rückerl, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "Befestigungstechnik für Highspeedkameras - viZaar AG", , 21 August 2016 (2016-08-21), XP055484948, Retrieved from the Internet: URL:https://web.archive.org/web/20160821040822/http://www.highspeed-xtra.de/hs-zubehoer/befestigungstechnik.html [retrieved on 2018-06-15] * the whole document * | 5,6 | |
| Y | US 2015/111456 A1 (HUANG TAO [US] ET AL) 23 April 2015 (2015-04-23) * paragraphs [0002] - [0004], [0054] * | 1-9 | |
| Y | US 5 433 993 A (SHAMBAUGH ROBERT L [US]) 18 July 1995 (1995-07-18) * column 25, lines 3-10 * * column 1 * | 1-9 | |

TECHNICAL FIELDS SEARCHED (IPC)

The present search report has been drawn up for all claims

| Place of search | Date of completion of the search | Examiner |
|---|---|---|
| Munich | 21 June 2018 | Rückerl, Ralph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 18 15 3159

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2018

| Patent document cited in search report | | | Publication date | Patent family member(s) | | | Publication date |
|---|---|---|---|---|---|---|---|
| KR | 100836274 | B1 | 10-06-2008 | NONE | | | |
| WO | 2009061508 | A1 | 14-05-2009 | US | 2011274825 | A1 | 10-11-2011 |
| | | | | US | 2014284828 | A1 | 25-09-2014 |
| | | | | WO | 2009061508 | A1 | 14-05-2009 |
| US | 2015111456 | A1 | 23-04-2015 | CN | 105658857 | A | 08-06-2016 |
| | | | | EP | 3060709 | A1 | 31-08-2016 |
| | | | | JP | 2016534239 | A | 04-11-2016 |
| | | | | KR | 20160073971 | A | 27-06-2016 |
| | | | | US | 2015111456 | A1 | 23-04-2015 |
| | | | | WO | 2015061377 | A1 | 30-04-2015 |
| US | 5433993 | A | 18-07-1995 | US | 5405559 | A | 11-04-1995 |
| | | | | US | 5433993 | A | 18-07-1995 |
| | | | | US | 5523033 | A | 04-06-1996 |
| | | | | WO | 9516062 | A1 | 15-06-1995 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2173930 A